# EUROPÄISCHE PATENTANMELDUNG

(11) **EP 2 404 698 A2**
(43) Veröffentlichungstag der Anmeldung: **11.01.2012**
(21) Anmeldenummer: 11184199.5
(22) Anmeldetag: 18.06.2010
(51) Int. Cl.: B23Q 11/10, F16L 23/16

(54) **Vorrichtung zur Abdichtung**

(30) Priorität: 24.06.2009 DE 102009030327; 22.02.2010 DE 102010008873
(62) Teilanmeldung aus: 10006322.1
(71) Anmelder: Gühring OHG, 72458 Albstadt (DE)
(72) Erfinder: Bozkurt, Lutfi, 72474 Winterlingen (DE)
(74) Vertreter: Meitinger, Thomas Heinz

(57) **Zusammenfassung**

Die Anmeldung beschreibt eine Vorrichtung zur Abdichtung eines Kühl- und/oder Schmiermittelkanals 107, 110, wobei der Kühl- und/oder Schmiermittelkanal 107, 110 durch ein erstes Werkzeugteil 106, durch ein zweites Werkzeugteil 101 und durch die Vorrichtung 109 verläuft, wobei die Vorrichtung 109 umfasst: einen ersten Abschnitt 602, 702, wobei der erste Abschnitt 602, 702 mit dem ersten Werkzeugteil 106 verbindbar ist, einen zweiten Abschnitt 604, 704, wobei der zweite Abschnitt 604, 704 derart angeordnet ist, dass er in den Kühl- und/oder Schmiermittelkanal 110 des zweiten Werkzeugteils 101 hineinragen kann, wobei der Außendurchmesser des zweiten Abschnitts 604, 704 größer oder gleich wie der Innendurchmesser des Kühl- und/oder Schmiermittelkanals 110 des zweiten Werkzeugteils 101 ist und einen mittleren Abschnitt 605, 705, wobei der mittlere Abschnitt 605, 705 zwischen dem ersten Abschnitt 602, 702 und dem zweiten Abschnitt 604, 704 angeordnet ist.

## Beschreibung

### GEBIET DER ERFINDUNG

Die vorliegende Erfmdung betrifft eine Vorrichtung zur Abdichtung eines Kühl- und/oder Schmiermittelkanals. Ferner betrifft die Erfindung einen Flansch und ein Werkzeugsystem.

### HINTERGRUND DER ERFINDUNG

Werkzeugsysteme können mehrere Werkzeugteile umfassen durch die Kühl- und/oder Schmiermittelkanäle geführt werden müssen, um die arbeitenden Teile des Werkzeugsystems mit Kühl- und/oder Schmiermitteln zu versorgen.

### ZUSAMMENFASSUNG DER ERFINDUNG

Die Schnittstellen der einzelnen Werkzeugteile bereiten dabei Probleme bezüglich der Abdichtung des Kühl- und/oder Schmiermittelkanals.

Es kann daher als eine Aufgabe der vorliegenden Erfindung betrachtet werden, eine Vorrichtung zur Abdichtung eines Kühl- und/oder Schmiermittelkanals insbesondere an Schnittstellen von zwei Werkzeugteilen zur Verfügung zu stellen.

Diese Aufgabe wird in den unabhängigen Ansprüchen gelöst. Weitere vorteilhafte Ausgestaltungen der Erfindung ergeben sich aus den abhängigen Ansprüchen.

Als eine erste Ausführungsform der Erfindung wird eine Vorrichtung zur Abdichtung eines Kühl- und/oder Schmiermittelkanals zur Verfügung gestellt, wobei der Kühl- und/oder Schmiermittelkanal durch ein erstes Werkzeugteil, durch ein zweites Werkzeugteil und durch die Vorrichtung verläuft, wobei die Vorrichtung umfasst: einen ersten Abschnitt, wobei der erste Abschnitt mit dem ersten Werkzeugteil verbindbar ist, einen zweiten Abschnitt, wobei der zweite Abschnitt derart angeordnet ist, dass er in den Kühl- und/oder Schmiermittelkanal des zweiten Werkzeugteils hineinragen kann, wobei der Außendurchmesser des zweiten Abschnitts größer oder gleich wie der Innendurchmesser des Kühl- und/oder Schmiermittelkanals des zweiten Werkzeugteils ist und einen mittleren Abschnitt, wobei der mittlere Abschnitt zwischen dem ersten Abschnitt und dem zweiten Abschnitt angeordnet ist.

Das erste und/oder zweite Werkzeugteil kann dabei einen Hohlschaftkegel bzw. einen Steilkegel bzw. eine Halterung für ein Werkzeug oder ein Spannfutter umfassen. Der Kühl- und/oder Schmiermittelkanal kann dabei zentral und/oder dezentral durch die Werkzeugteile führend angeordnet sein.

Insbesondere der zweite Abschnitt der Vorrichtung dient der Abdichtung. Der Außendurchmesser des zweiten Abschnitts weist hierzu im Vergleich zum Innendurchmesser des Kühl- und/oder Schmiermittelkanals ein Übermaß auf. Hierdurch wird sichergestellt, dass kein Spalt zwischen der Vorrichtung und der Innenwandung des Kühl- und/oder Schmiermittelkanals entstehen kann, wodurch sich Lecks ergeben könnten.

Die Vorrichtung zur Abdichtung ist insbesondere vorteilhaft, da zum Sicherstellen der Dichtheit der Schnittstelle keine weiteren Vorrichtungen bzw. Verfahren nötig sind. Insbesondere kann darauf verzichtet werden, Anlageflächen der Schnittstelle zu schleifen, um eine geringe Rauheit bzw. Welligkeit zu erreichen.

Als zweite Ausführungsform der Erfindung wird ein Flansch umfassend eine erste Platte, und eine zweite Platte zur Verfügung gestellt, wobei die erste Platte mit der zweiten Platte verbindbar ist, wobei die zweite Platte Bohrungen mit Innengewinde aufweist, in die Schrauben einschraubbar sind, wodurch die Spitzen der Schrauben auf der ersten Platte aufsitzen, wobei die zweite Platte mindestens sechs Bohrungen mit Innengewinde aufweist.

Eine lösbare Verbindung zwischen zwei Werkzeugteilen wird z.B. durch einen Flansch erzielt, wobei die beiden Platten des Flansches miteinander verschraubt oder verklemmt werden können. Falls ein Werkzeugteil z.B. ein Spannfutter für ein Werkzeug umfasst, muss sichergestellt werden, dass dieses Werkzeugteil bei Rotation rund läuft. Hierzu kann es notwendig sein, das Spannfutter in Relation zum verbundenen Werkzeugteil zu kippen. Dies kann durch Schrauben, die in die Flanschplatte des Spannfutters eingeschraubt werden erreicht werden, wodurch diese gegen die zweite Flanschplatte gepresst werden, woraus ein Neigen des Spannfutters zum anderen Werkzeugteil resultieren kann. Vorteilhafterweise werden hierzu mindestens sechs Schrauben, gleichmäßig oder ungleichmäßig über den Umfang der Flanschplatte verteilt, verwendet, um eine sehr genaue Einstellung zu ermöglichen. Hierdurch wird ein exakter Rundlauf des Spannfutters sichergestellt.

Als dritte Ausführungsform der Erfindung wird ein Werkzeugsystem umfassend ein erstes Werkzeugteil mit einer ersten Platte eines Flansches, und ein zweites Werkzeugteil mit einer zweiten Platte des Flansches zur Verfügung gestellt, wobei das erste Werkzeugteil mit dem zweiten Werkzeugteil mittels des Flansches verbindbar ist, wobei die zweite Platte Bohrungen mit Innengewinde aufweist, in die Schrauben einschraubbar sind, wodurch die Spitzen der Schrauben auf der ersten Platte aufsitzen, wobei die zweite Platte mindestens sechs Bohrungen mit Innengewinde aufweist.

Gemäß einer beispielhaften Ausführungsform der Erfindung wird eine Vorrichtung zur Verfügung gestellt, wobei die Vorrichtung elastisch ist. Durch die elastische Ausführung der Vorrichtung wird ein sich Aufweiten der Vorrichtung nach Einführung in den Kühl- und/oder Schmiermittelkanal ermöglicht, wodurch die Dichtheit des Kühl- und/oder Schmiermittelkanal erreicht wird. Ferner erleichtert die Elastizität der Vorrichtung den Zusammenbau der Werkzeugteile, da auf ein exaktes Führen der Werkzeugteile beim Zusammenbau verzichtet werden kann.

In einer weiteren erfindungsgemäßen Ausführungsform wird eine Vorrichtung zur Verfügung gestellt, wobei die Vorrichtung röhrenförmig ist. Hierdurch kann entlang eines ganzen Abschnitts ein Anliegen der Vorrichtung an den Kühl- und/oder Schmiermittelkanal erzielt werden, wodurch Lecks zwischen der Vorrichtung und dem Kühl- und/oder Schmiermittelkanal sicher verhindert werden können.

Gemäß einem weiteren Ausführungsbeispiel der vorliegenden Erfmdung wird eine Vorrichtung zur Verfügung gestellt, wobei ein Teil des mittleren Abschnitts derart angeordnet ist, dass er in den Kühl- und/oder Schmiermittelkanal des zweiten Werkzeugteils hineinragen kann.

Durch eine vorteilhafte Ausgestaltung mit einer weit in den Kühl- und/oder Schmiermittelkanal hineinragenden Vorrichtung zur Abdichtung ist ein dichter Kühl- und/oder Schmiermittelkanal auch z.B. bei Montagearbeiten an den Werkzeugteilen gewährleistet, insbesondere wenn die Werkzeugteile zwar nicht auseinander gebaut werden müssen, aber deren Verbindung dennoch gelockert werden muss.

Gemäß einer beispielhaften Ausführungsform der Erfmdung wird eine Vorrichtung zur Verfügung gestellt, wobei die Vorrichtung umfasst: eine Scheibe, die mit dem ersten Werkzeugteil verbindbar ist, wobei die Scheibe eine durchgehende Ausnehmung aufweist, in die der erste Abschnitt einsteckbar ist.

Vorteilhafterweise besteht die Vorrichtung aus mehreren, z.B. zwei Teilen, wodurch eine Produktion komplizierter Bauteile vermieden werden kann. Hierdurch können stattdessen einfachere Teile hergestellt werden bzw. es kann auf Normteile zurückgegriffen werden bei der Herstellung der Vorrichtung zur Abdichtung. Die Scheibe kann ferner bereits früh während der Produktion in das Werkzeugteil eingesetzt werden, ohne befürchten zu müssen, dass während des weiteren Produktionsablaufs Schäden durch hervorragende Teile entstehen könnten.

In einer weiteren erfindungsgemäßen Ausführungsform wird eine Vorrichtung zur Verfügung gestellt, wobei die Scheibe elastisch ist. In eine elastische Scheibe kann die Vorrichtung zur Abdichtung leichter eingeführt werden, wodurch sich die Montage vereinfacht.

Gemäß einem weiteren Ausführungsbeispiel der vorliegenden Erfindung wird eine Vorrichtung zur Verfügung gestellt, wobei der erste Abschnitt einen Außendurchmesser aufweist, der größer als der Außendurchmesser des mittleren Abschnitts ist.

Gemäß einer beispielhaften Ausführungsform der Erfindung wird eine Vorrichtung zur Verfügung gestellt, wobei der zweite Abschnitt einen Außendurchmesser aufweist, der größer als der Außendurchmesser des mittleren Abschnitts ist.

Durch einen Aufbau mit einem oder zwei verdickten Enden der Vorrichtung zur Abdichtung und einem im Vergleich hierzu schlanken mittleren Abschnitt ergibt sich eine leichtere Montage der Vorrichtung mit den Werkzeugteilen, da sich größere Freiheitsgrade beim Verschwenken der Vorrichtung in Relation zu den Werkzeugteilen ergeben.

In einer weiteren erfindungsgemäßen Ausführungsform wird eine Vorrichtung zur Verfügung gestellt, wobei die Vorrichtung einen konstanten Außendurchmesser aufweist. Hierdurch ergibt sich eine sehr einfache Struktur der Vorrichtung, wodurch die Produktionskosten minimiert werden können.

Gemäß einem weiteren Ausführungsbeispiel der vorliegenden Erfindung wird eine Vorrichtung zur Verfügung gestellt, wobei die Vorrichtung im zweiten Abschnitt eine Dichtung aufweist. Durch eine zusätzliche Dichtung (neben dem zweiten Abschnitt selbst) erhöht sich die Zuverlässigkeit der durch die Vorrichtung erzielten Dichtheit.

Gemäß einer beispielhaften Ausführungsform der Erfindung wird eine Vorrichtung zur Verfügung gestellt, wobei die Dichtung ein O-Ring ist.

Gemäß einer beispielhaften Ausführungsform der Erfindung wird eine Vorrichtung zur Verfügung gestellt, wobei die Vorrichtung umfasst: ein Außengewinde zur lösbaren Verbindung mit dem ersten und/oder zweiten Werkzeugteil und/oder ein O-Ring zur Abdichtung zu dem ersten und/oder zweiten Werkzeugteil.

Die erfindungsgemäße Vorrichtung zur Abdichtung kann mit einem oder mehreren Außengewinden versehen werden, um eine lösbare Verbindung mit einem oder mehreren Werkzeugteilen herzustellen, wodurch sicher gestellt wird, dass die Vorrichtung zur Abdichtung z.B. beim Zusammensetzen der Werkzeugteile nicht verrutschen kann und dadurch ihre Dichtfunktion einbüßen könnte. Ferner kann in einer weiteren Ausführungsform die Vorrichtung zur Abdichtung mit O-Ringen versehen werden, wodurch eine noch bessere Dichtfunktion erreicht werden kann.

In einer weiteren erfindungsgemäßen Ausführungsform wird ein Werkzeugsystem umfassend ein erstes Werkzeugteil und ein zweites Werkzeugteil zur Verfügung gestellt, wobei das erste Werkzeugteil mit dem zweiten Werkzeugteil verbindbar ist, wobei durch das erste Werkzeugteil und durch das zweite Werkzeugteil ein Kühl- und/oder Schmiermittelkanal verläuft, wobei das Werkzeugsystem eine Vorrichtung nach einem der Ansprüche 1 bis 12 umfasst.

Als einen Aspekt der Erfindung kann angesehen werden, eine Dichtung (Vorrichtung zur Abdichtung) zur Verfügung zu stellen, die die Kühl- und/oder Schmiermittelkanäle zweier Werkzeugteile miteinander verbindet, wobei durch die röhrenförmige Ausgestaltung der Dichtung auch bei einem begrenzten Auseinanderfahren der betreffenden Werkzeugteile die Dichtheit des Kühl- und/oder Schmiermittelkanals sichergestellt wird. Ferner ist ein weiterer Aspekt der Erfindung das Anordnen von mindestens sechs Schrauben an einer Anlageplatte eines Flansches, wodurch die Spitze der Schrauben gegen die komplementäre Flanschplatte gepresst wird, um ein Verkippen des einen Werkzeugteils zum anderen Werkzeugteils zu ermöglichen. Durch die Verwendung von mindestens sechs Schrauben kann ein sehr guter Rundlauf eingestellt werden, was die Qualität von z.B. Bohrungen drastisch erhöhen kann.

Die einzelnen Merkmale können selbstverständlich auch untereinander kombiniert werden, wodurch sich zum Teil auch vorteilhafte Wirkungen einstellen können, die über die Summe der Einzelwirkungen hinausgehen.

### KURZE BESCHREIBUNG DER ZEICHNUNGEN

Weitere Einzelheiten und Vorteile der Erfindung werden anhand der in den Zeichnungen dargestellten Ausführungsbeispiele deutlich. Es zeigen
- Fig. 1.: einen Längsschnitt zweier Werkzeugteile
- Fig. 2.: ein Längsschnitt eines Werkzeugteils
- Fig. 3.: eine Platte eines Flansches
- Fig. 4.: einen Längsschnitt eines Werkzeugteils
- Fig. 5.: eine Platte eines Flansches
- Fig. 6.: eine Vorrichtung zur Abdichtung
- Fig. 7: eine Vorrichtung zur Abdichtung
- Fig. 8: einen Längsschnitt zweier Werkzeugteile
- Fig. 9: einen Längsschnitt zweier Werkzeugteile mit einer weiteren erfmdungsgemäßen Vorrichtung zur Abdichtung

### DETAILLIERTE BESCHREIBUNG BEISPIELHAFTER AUSFÜHRUNGSFORMEN

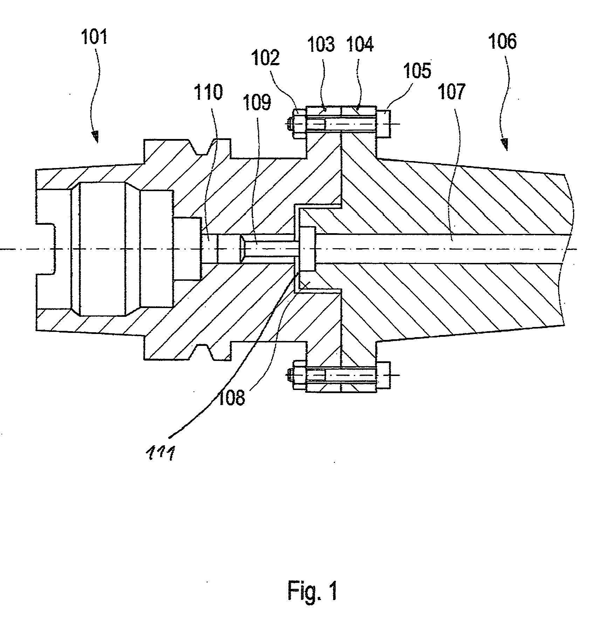

Fig. 1 zeigt zwei Werkzeugteile 101, 106, die mittels eines Flansches zusammengefügt sind. Das Werkzeugteil 101 weist einen Hohlschaftkegel auf und eine Platte 103 eines Flansches. Das Werkzeugteil 106 weist eine Halterung für ein Werkzeug auf und eine komplementäre Platte 104 eines Flansches, die mit der ersten Platte 103 des Flansches verschraubt werden kann. Hierzu weisen die Platten 103, 104 des Flansches fluchtende Bohrungen auf, durch die Schrauben 105 geführt werden können und mit Muttern 102 verschraubt werden können. Das Zusammenfügen der Platten 103, 104 des Flansches kann auch mittels Gewindebolzen herbeigeführt werden, wobei diese auf beiden Seiten des Flansches mit Muttern 102 verschraubt werden können. Eine Platte 103 des Flansches kann auch Bohrungen mit Gewinde aufweisen in die Schrauben 105 eingreifen können, wodurch ebenfalls die beiden Werkzeugteile 101, 106 lösbar zusammengefügt werden können. Die Schrauben 105 können auch versenkt in der Platte 104 des Flansches angeordnet sein. Die Werkzeugteile 101, 106 weisen Kühl- und/oder Schmiermittelkanäle 107, 110 auf, die eine Förderung des Kühl- und/oder Schmiermittels vom Hohlschaftkegel bis zu den arbeitenden Teilen des Werkzeugs (nicht dargestellt) ermöglichen. Damit das Kühl- und/oder Schmiermittel nicht an der Schnittstelle der beiden Werkzeugteile, dem Flansch, austritt, ist eine Vorrichtung zur Abdichtung 109 vorgesehen. Diese Vorrichtung zur Abdichtung 109 ist in einem Vorsprung 108 des Werkzeugteils 106 verankert und ragt in den Kühl- und/oder Schmiermittelkanal 110 des Werkzeugteils 101 hinein. Die Vorrichtung zur Abdichtung 109 umfasst einen Abschnitt mit größerem Durchmesser, wobei dieser Durchmesser im Vergleich zum Innendurchmesser des Kühl- und/oder Schmiermittelkanals 110 ein Übermaß aufweist. Hierdurch legt sich dieser Abschnitt der Vorrichtung zur Abdichtung 109 dicht an die Innenwandungen des Kühl- und Schmiermittelkanals 110, wodurch der Kühl- und/oder Schmiermittelkanal 110 abgedichtet wird. Die Vorrichtung zur Abdichtung 109 dient insbesondere dazu, zu verhindern, dass Kühl- und/oder Schmiermittel in den Spalt 111 zwischen den Werkzeugteilen 101, 106 gelangen kann.

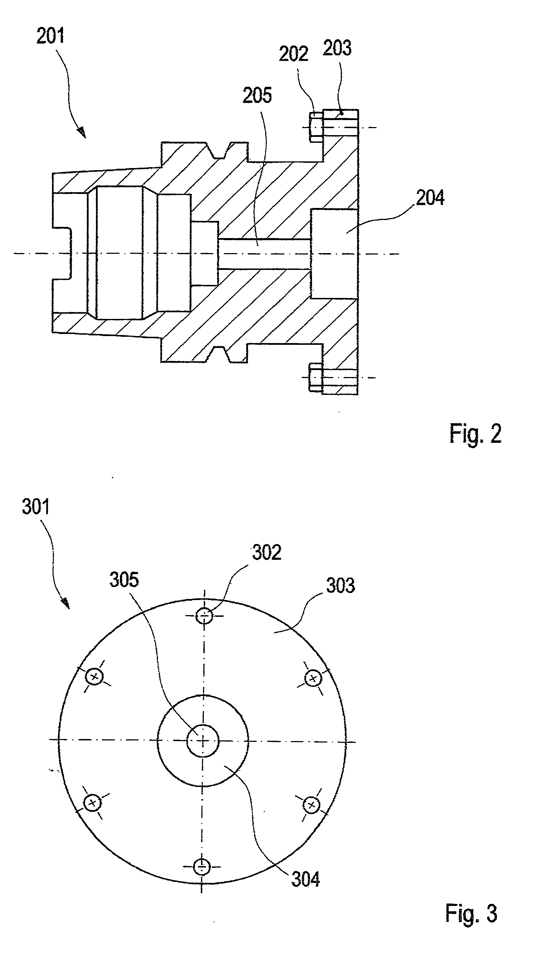

Fig. 2 zeigt das Werkzeugteil 201 mit dem Hohlschaftkegel, wobei das Werkzeugteil 201 auch eine Platte 203 eines Flansches aufweist. Ferner weist das Werkzeugteil eine Ausnehmung 204 auf, in die ein komplementärer Vorsprung eines zweiten Werkzeugteils eingesetzt werden kann. Durch die Kombination Ausnehmung/Vorsprung kann eine Abdichtung der Schnittstelle des Flansches erreicht werden, insbesondere wenn die Anlageflächen des Flansches 203 sich durch geringe Rauheit und Welligkeit auszeichnen. Hierdurch kann durch das Werkzeugteil 201 Kühl- und/oder Schmiermittel in einem Kanal 205 geführt werden.

Fig. 3 zeigt eine Vorderansicht einer Platte 303 des Flansches eines Werkzeugteils 301. Hierbei ist die Platte 303 des Flansches abgebildet, die zum Werkzeugteil 201 der Fig. 2 gehört. Die Platte 303 umfasst Bohrungen 302 zum Zusammenfügen, wobei die Bohrungen 302 Innengewinde aufweisen können. Ferner ist die Ausnehmung 304 dargestellt sowie der Kühl- und/oder Schmiermittelkanal 305.

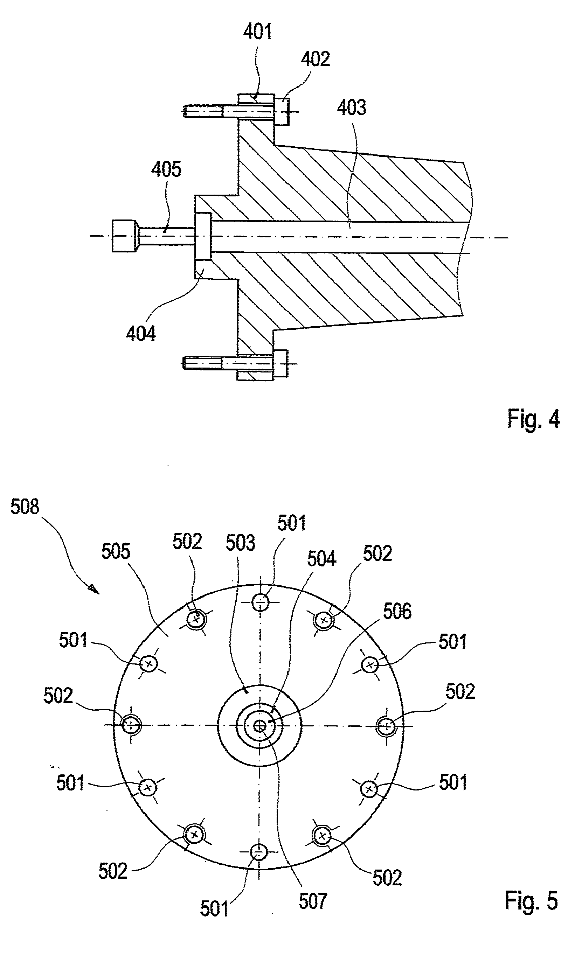

Fig. 4 zeigt ein Werkzeugteil, wobei das Werkzeug einen Vorsprung 404 aufweist sowie eine Vorrichtung zur Abdichtung 405, die als Röhre ausgebildet ist. Das dargestellte Werkzeugteil kann mit einem zweiten Werkzeugteil mittels der Platte 401 des Flansches zusammengefügt werden, wobei der Vorsprung 404 in das zweite Werkzeugteil hineinragt und die Vorrichtung zur Abdichtung 405 zur Abdichtung der Schnittstelle dient.

Fig. 5 zeigt eine Vorderansicht eines Werkzeugteils 508, wobei die Platte 505 eines Flansches dargestellt ist, die zum Werkzeugteil gemäß der Fig. 4 gehört. Dargestellt sind hierbei sechs Bohrungen 501 zum Zusammenfügen dieses Werkzeugteils 508 mit einem weiteren Werkzeugteil, sowie weitere sechs Bohrungen 502 zum Verkippen des Werkzeugteils 508 in Relation zu dem weiteren verbundenen Werkzeugteil. Die Bohrungen 501 weisen komplementäre Bohrungen beim weiteren Werkzeugteil auf, wodurch ein Zusammenfügen erreicht werden kann. Die Bohrungen 502 haben keine entsprechenden Bohrungen bei der Platte des weiteren Werkzeugteils. Ferner weisen die Bohrungen 502 Innengewinde auf. Hierdurch können Schrauben in die Bohrungen 502 eingeschraubt werden, deren Schraubenspitze auf der Platte des weiteren Werkzeugteils aufsitzen, wodurch ein Verkippen beider Werkzeugteile zueinander erreicht werden kann. Ferner ist der Vorsprung 503 dargestellt, der Abschnitt der Vorrichtung zur Abdichtung 504, der im Vorsprung 503 verankert ist, sowie der vordere Abschnitt der Vorrichtung zur Abdichtung 506, der in das weitere Werkzeugteil hineinragt, sowie der Kühl- und/oder Schmiermittelkanal 507.

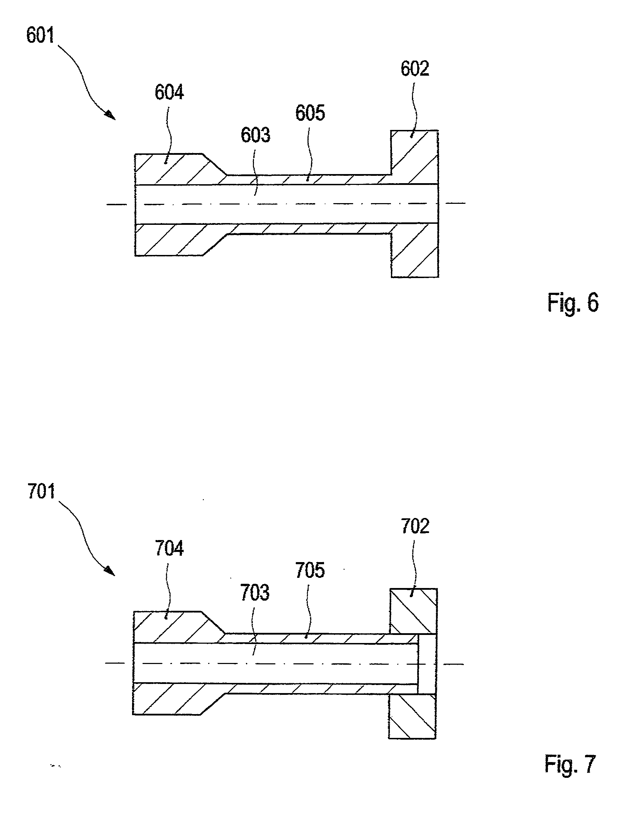

Fig. 6 zeigt eine Vorrichtung zur Abdichtung 601 mit einem vorderen Abschnitt mit größerem Außendurchmesser 604, der mit den Innenwandungen des Kühl- und/oder Schmiermittelkanals eines ersten Werkzeugteils verklemmt werden kann, sowie einen Abschnitt 602 mit ebenfalls größerem Außendurchmesser 602, der mit einem zweiten Werkzeugteil verbunden werden kann.

Fig. 7 zeigt eine weitere Variante einer Vorrichtung zur Abdichtung 701, wobei hierbei die Vorrichtung 701 in einer Scheibe 702 steckt. Die Scheibe 702 kann in ein erstes Werkzeugteil einsteckbar ausgebildet sein. Der Kühl- und/oder Schmiermittelkanal 703 kann an einem oder auch an beiden Enden der Vorrichtung 701 aufgeweitet ausgebildet sein.

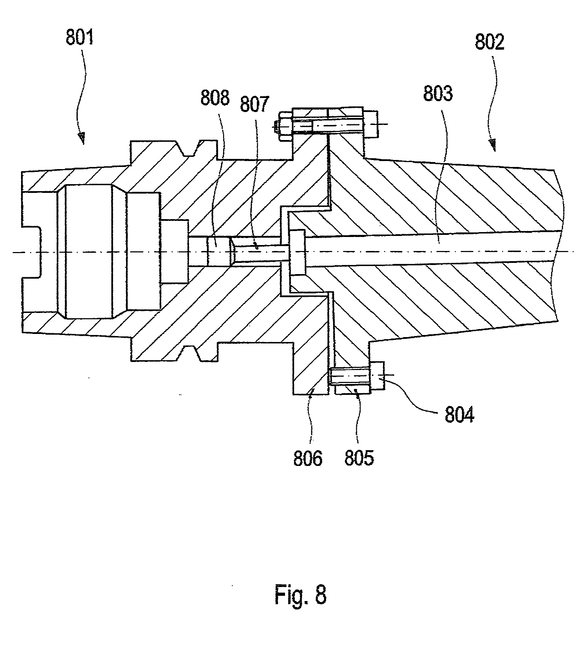

Fig. 8 zeigt zwei Werkzeugteile 801, 802, die durch einen Flansch verbunden sind. Ferner ist das Werkzeugteil 802 im Vergleich zum Werkzeugteil 801 gekippt, um einen Rundlauf des im Werkzeugteil 802 eingespannten Werkzeugs zu gewährleisten. Hierbei kann sich ein Spalt zwischen den Platten des Flansches 805, 806 ergeben. Damit dennoch der durchlaufende Kühl- und/oder Schmiermittelkanal 803 dicht bleibt, ist eine Vorrichtung zur Abdichtung 807 vorgesehen, die von einem Werkzeugteil 802 in das andere Werkzeugteil 801 reicht und einen Abschnitt mit größerem Durchmesser 808 aufweist, der elastisch ausgebildet ist und auch bei Verkippen eine Abdichtung garantiert.

Das Verkippen wird durch Schrauben 804 erreicht, die in ein Innengewinde der Platte 805 des Flansches eingreifen können und deren Spitze auf der anderen Platte 806 des Flansches aufsitzen. Vorzugsweise werden mindestens sechs Schrauben verwendet, um einen guten Rundlauf des Werkzeugteils 802 zu erreichen.

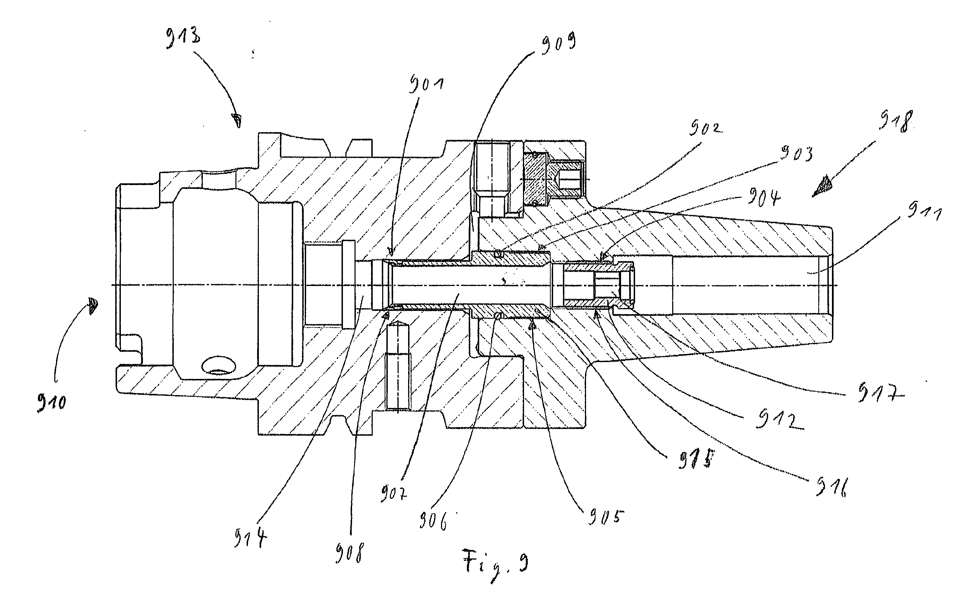

Fig. 9 zeigt eine weitere erfinderische Ausführungsform einer Vorrichtung zur Abdichtung 915, wobei die Vorrichtung zur Abdichtung 915 dazu dient, dass eine leckage-freie Verbindung der Kanäle 914, 911 für Kühl- und/oder Schmiermittel zweier Werkzeugteile 918, 913 sicher gestellt wird. Die Vorrichtung zur Abdichtung 915 verhindert insbesondere, dass Kühl- und/oder Schmiermittel, das von dem zentralen Kanal 914 zu einem in die Bohrung 911 einsetzbaren Werkzeug geführt werden soll, in den Spalt 909 gelangen kann. Erfindungsgemäß wird daher im Ergebnis eine zielgerichtete Verwendung des Kühl- und/oder Schmiermittels zur Kühlung und/oder Schmierung der schneidenden Abschnitte eines in die Bohrung 911 eingesetzten Werkzeugs, z.B. ein Bohrwerkzeug, ein Fräswerkzeug, ein Drehwerkzeug oder eine Reibahle, ermöglicht. Die Vorrichtung zur Abdichtung 915 weist einen linken Bereich mit abdichtenden Bereichen 901, 908 auf, die z.B. als eine Dichtlippe ausgeführt sein können, ferner einen zentralen Kanal 907 zur Leitung von Kühl- und/oder Schmiermittel sowie eine Dichtung, z.B. einen O-Ring 902, 906, zur Abdichtung der Vorrichtung zur Abdichtung 915 zu zumindest einem Werkzeugteil 918, 913. Ein weiterer O-Ring kann auch an weiteren Abschnitten der Vorrichtung zur Abdichtung vorgesehen sein, insbesondere um ein Entweichen des Kühl- und/oder Schmiermittels in den Spalt 909 zwischen den Werkzeugteilen 913, 918 zu verhindern. Die Vorrichtung zur Abdichtung 915 kann ferner ein Außengewinde 903, 905 aufweisen, das zur lösbaren Verbindung der Vorrichtung zur Abdichtung 915 mit einem der beiden Werkzeugteile 918, 913 vorgesehen sein kann. In einer alternativen Ausführungsform kann die Vorrichtung zur Abdichtung mehrere Außengewinde aufweisen, um eine lösbare Verbindung mit einem oder mit beiden Werkzeugteilen 918, 913 herstellen zu können. In einer weiteren alternativen Ausführungsform kann die Vorrichtung zur Abdichtung mehrere O-Ringe aufweisen. In einer noch weiteren alternativen Ausführungsform kann ein O-Ring derart angeordnet sein, dass Kühl- und/oder Schmiermittel nicht zu einem oder zu den Außengewinden der Vorrichtung zur Abdichtung gelangen kann. Ferner ist eine MMS-Schraube 912 dargestellt, die zur Einstellung der Einspanntiefe des Werkzeugs in die Bohrung 911 dienen kann, wobei die MMS-Schraube 912 z.B. einen Innensechskant 917 aufweisen kann, in den ein passender Schlüssel über die Kanäle 914, 907 eingesteckt werden kann. Durch eine Rotation des eingeführten Schlüssels kann die MMS-Schraube 912 in eine rotierende Bewegung versetzt werden. Durch die rotierende Bewegung der MMS-Schraube 912 sowie aufgrund des Außengewindes 904, 916 der MMS-Schraube 912 kann die MMS-Schraube 912 nach links oder nach rechts verfahren werden. Falls die MMS-Schraube 912 nach links versetzt wird, kann ein Werkzeug tiefer in die Bohrung 911 eingesteckt werden. Falls die MMS-Schraube 912 nach rechts versetzt wird, kann das Werkzeug weniger tief in die Bohrung 911 eingesetzt werden.

Es sei angemerkt, dass der Begriff "umfassen" weitere Elemente oder Verfahrensschritte nicht ausschließt, ebenso wie der Begriff "ein" und "eine" mehrere Elemente und Schritte nicht ausschließt.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

### LISTE DER BEZUGSZEICHEN

- 101: Werkzeugteil
- 102: Mutter
- 103: Platte eines Flansches
- 104: Platte eines Flansches
- 105: Schraube
- 106: Werkzeugteil
- 107: Kühl- und/oder Schmiermittelkanal
- 108: Vorsprung
- 109: Vorrichtung zur Abdichtung
- 110: Kühl- und/oder Schmiermittelkanal
- 111: Spalt
- 201: Werkzeugteil
- 202: Mutter
- 203: Platte eines Flansches
- 204: Ausnehmung
- 205: Kühl- und/oder Schmiermittelkanal
- 301: Werkzeugteil
- 302: Bohrung
- 303: Platte eines Flansches
- 304: Ausnehmung
- 305: Kühl- und/oder Schmiermittelkanal
- 401: Platte eines Flansches
- 402: Schraube
- 403: Kühl- und/oder Schmiermittelkanal
- 404: Vorsprung
- 405: Vorrichtung zur Abdichtung
- 501: Bohrung
- 502: Bohrung
- 503: Vorsprung
- 504: Vorrichtung zur Abdichtung
- 505: Platte eines Flansches
- 506: Vorrichtung zur Abdichtung
- 507: Kühl- und/oder Schmiermittelkanal
- 508: Werkzeugteil
- 601: Vorrichtung zur Abdichtung
- 602: erster Abschnitt einer Vorrichtung zur Abdichtung
- 603: Kühl- und/oder Schmiermittelkanal
- 604: zweiter Abschnitt einer Vorrichtung zur Abdichtung
- 605: mittlerer Abschnitt einer Vorrichtung zur Abdichtung
- 701: Vorrichtung zur Abdichtung
- 702: erster Abschnitt einer Vorrichtung zur Abdichtung
- 703: Kühl- und/oder Schmiermittelkanal
- 704: zweiter Abschnitt einer Vorrichtung zur Abdichtung
- 705: mittlerer Abschnitt einer Vorrichtung zur Abdichtung
- 801: Werkzeugteil
- 802: Werkzeugteil
- 803: Kühl- und/oder Schmiermittelkanal
- 804: Schraube
- 805: Platte eines Flansches
- 806: Platte eines Flansches
- 807: Vorrichtung zur Abdichtung
- 808: Abschnitt mit größerem Außendurchmesser einer Vorrichtung zur Abdichtung
- 901: Dichtlippe
- 902: O-Ring
- 903: Außengewinde
- 904: Außengewinde
- 905: Außengewinde
- 906: O-Ring
- 907: Kanal
- 908: Dichtlippe
- 909: Spalt
- 910: HSK-Schnittstelle
- 911: Bohrung
- 912: MMS-Schraube
- 913: Werkzeugteil
- 914: Kanal
- 915: Vorrichtung zur Abdichtung
- 916: Außengewinde
- 917: Innensechskant
- 918: Werkzeugteil

## Patentansprüche

1. Vorrichtung zur Abdichtung eines Kühl- und/oder Schmiermittelkanals (107, 110), wobei der Kühl- und/oder Schmiermittelkanal (107, 110) durch ein erstes Werkzeugteil (106), durch ein zweites Werkzeugteil (101) und durch die Vorrichtung (109) verläuft, wobei die Vorrichtung (109) umfasst
einen ersten Abschnitt (602, 702), wobei der erste Abschnitt (602, 702) mit dem ersten Werkzeugteil (106) verbindbar ist,
einen zweiten Abschnitt (604, 704), wobei der zweite Abschnitt (604, 704) derart angeordnet ist, dass er in den Kühl- und/oder Schmiermittelkanal (110) des zweiten Werkzeugteils (101) hineinragen kann, wobei der Außendurchmesser des zweiten Abschnitts (604, 704) größer oder gleich wie der Innendurchmesser des Kühl- und/oder Schmiermittelkanals (110) des zweiten Werkzeugteils (101) ist und
einen mittleren Abschnitt (605, 705), wobei der mittlere Abschnitt (605, 705) zwischen dem ersten Abschnitt (602, 702) und dem zweiten Abschnitt (604, 704) angeordnet ist.

2. Vorrichtung nach Anspruch 1, wobei die Vorrichtung (109) elastisch ist.

3. Vorrichtung nach einem der Ansprüche 1 oder 2, wobei die Vorrichtung (109) röhrenförmig ist.

4. Vorrichtung nach einem der vorhergehenden Ansprüche, wobei ein Teil des mittleren Abschnitts (603, 703) derart angeordnet ist, dass er in den Kühl- und/oder Schmiermittelkanal (110) des zweiten Werkzeugteils (101) hineinragen kann.

5. Vorrichtung nach einem der vorhergehenden Ansprüche, wobei die Vorrichtung (109) umfasst
eine Scheibe (702), die mit dem ersten Werkzeugteil (106) verbindbar ist, wobei die Scheibe (702) eine durchgehende Ausnehmung aufweist, in die der erste Abschnitt einsteckbar ist.

6. Vorrichtung nach Anspruch 5, wobei die Scheibe (702) elastisch ist.

7. Vorrichtung nach einem der vorhergehenden Ansprüche, wobei der erste Abschnitt (602, 702) einen Außendurchmesser aufweist, der größer als der Außendurchmesser des mittleren Abschnitts (605, 705) ist.

8. Vorrichtung nach einem der vorhergehenden Ansprüche, wobei der zweite Abschnitt (604, 704) einen Außendurchmesser aufweist, der größer als der Außendurchmesser des mittleren Abschnitts (605, 705) ist.

9. Vorrichtung nach einem der Ansprüche 1 bis 6, wobei die Vorrichtung (109) einen konstanten Außendurchmesser aufweist.

10. Vorrichtung nach einem der vorhergehenden Ansprüche, wobei die Vorrichtung (109) im zweiten Abschnitt (604, 704) eine Dichtung aufweist.

11. Vorrichtung nach Anspruch 10, wobei die Dichtung ein O-Ring ist.

12. Vorrichtung nach einem der vorhergehenden Ansprüche, wobei die Vorrichtung (915) umfasst
ein Außengewinde (903, 905) zur lösbaren Verbindung mit dem ersten und/oder zweiten Werkzeugteil (913, 918) und/oder
ein O-Ring (902, 906) zur Abdichtung zu dem ersten und/oder zweiten Werkzeugteil (913,918).

13. Werkzeugsystem umfassend
ein erstes Werkzeugteil (106) und
ein zweites Werkzeugteil (101), wobei das erste Werkzeugteil (106) mit dem zweiten Werkzeugteil (101) verbindbar ist, wobei durch das erste Werkzeugteil (106) und durch das zweite Werkzeugteil (101) ein Kühl- und/oder Schmiermittelkanal (107, 110) verläuft, wobei das Werkzeugsystem eine Vorrichtung (109) nach einem der vorhergehenden Ansprüche umfasst.

14. Flansch umfassend
eine erste Platte (806), und
eine zweite Platte (805), wobei die erste Platte (806) mit der zweiten Platte (805) verbindbar ist, wobei die zweite Platte (805) Bohrungen mit Innengewinde aufweist, in die Schrauben einschraubbar sind, wodurch die Spitzen der Schrauben auf der ersten Platte (806) aufsitzen, wobei die zweite Platte (805) mindestens sechs Bohrungen mit Innengewinde aufweist.

15. Werkzeugsystem umfassend
ein erstes Werkzeugteil (801) mit einer ersten Platte (806) eines Flansches, und
ein zweites Werkzeugteil (802) mit einer zweiten Platte (805) des Flansches, wobei das erste Werkzeugteil (801) mit dem zweiten Werkzeugteil (802) mittels des Flansches verbindbar ist, wobei die zweite Platte (805) Bohrungen mit Innengewinde aufweist, in die Schrauben einschraubbar sind, wodurch die Spitzen der Schrauben auf der ersten Platte (806) aufsitzen, wobei die zweite Platte (805) mindestens sechs Bohrungen mit Innengewinde aufweist.
